Europäisches Patentamt

European Patent Office

Office européen des brevets

(11) Veröffentlichungsnummer: **0 211 302 B1**

(12) **EUROPÄISCHE PATENTSCHRIFT**

(45) Veröffentlichungstag der Patentschrift: **21.11.91**

(51) Int. Cl.⁵: **G11B 15/32**, G11B 15/44

(21) Anmeldenummer: **86109955.4**

(22) Anmeldetag: **19.07.86**

(54) **Wickel- und Bandantrieb für eine Magnetbandkassette.**

(30) Priorität: **31.07.85 DE 3527358**

(43) Veröffentlichungstag der Anmeldung:
**25.02.87 Patentblatt 87/09**

(45) Bekanntmachung des Hinweises auf die
Patenterteilung:
**21.11.91 Patentblatt 91/47**

(84) Benannte Vertragsstaaten:
**AT BE CH DE FR GB IT LI LU NL SE**

(56) Entgegenhaltungen:
**DE-A- 3 032 807**     **DE-B- 1 168 665**
**DE-B- 1 202 591**     **GB-A- 807 437**
**GB-A- 1 112 899**     **GB-A- 2 007 006**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Weisser, Fritz, Dipl.-Ing.**
**Kesselberg 15**
**W-7742 St. Georgen(DE)**
Erfinder: **Schandl, Hartmut, Dipl.-Ing.**
**Egerstrasse 2**
**W-7730 Villingen(DE)**

(74) Vertreter: **Einsel, Robert, Dipl.-Ing.**
**Deutsche Thomson-Brandt GmbH Patent-
und Lizenzabteilung Göttinger Chaussee 76**
**W-3000 Hannover 91(DE)**

## Beschreibung

Video- und Audiorecorder speichern die Information vorzugsweise auf Magnetband, das in einer Kassette auf zwei nebeneinanderliegenden Wickelkörpern untergebracht ist. Die Kassette ist dabei so eingelegt, daß die Wickelkörper kraftschlüssig in entsprechende Dorne der Antriebsmechanismen des Abspielgerätes einrasten.

Bei handelsüblichen Videorecordern mit einer rotierenden Kopftrommel ist es erforderlich, das Magnetband durch eine Mechanik aus der Kassette herauszuziehen und mit Hilfe von Führungen an den Umfang der Kopftrommel anzulegen. Dieser Fädelvorgang wird durch einen Motor, auch Fädelmotor genannt, bewirkt, der das Magnetband mit über Kurvenscheiben angetriebenen Fädelwagen in seine Spielposition bringt.

Durch einen weiteren Motor, der auch gleichzeitig als Capstan-Motor ausgebildet sein kann werden die Wickelteller angetrieben, wobei dieser Antrieb z.B. über ein Schwenkrad erfolgt, das jeweils an den ziehenden Wickelteller angekoppelt wird, während der Abwickelteller über eine Reibungsbremse die geforderte Bandspannung aufrechterhält. Weil eine gleichmäßige Bandspannung über die gesamte Bandlänge notwendig ist, wird durch einen Bandzugfühler die jeweilige Bandspannung abgetastet und je nach Stellung des Fühlers in eine angepaßte Bremswirkung für den Abwickelteller umgesetzt.

Es ist bekannt, die Wickelteller von einem Wickelmotor, der gleichzeitig die Tonwelle treibt, über ein Schwenkrad anzutreiben, wobei jeder Wickelteller mit einer Rutschkupplung versehen ist. Der Antrieb erfolgt an der Antriebsseite der Rutschkupplung. Eine gleichmäßige Bandspannung wird über diese Kupplungen in Verbindung mit einer Umschlingungsbremse erreicht, die durch den Bandzugfühler gesteuert, am Kupplungsteil des Abwickeltellers angreift. Für veränderte Geschwindigkeit der Wickelteller z.B. bei Bildsuchlauf ist es üblich, das Schwenkrad über ein

Es ist Aufgabe der Erfindung, einen Wickel- und Bandantrieb für eine Magnetbandkassette mit einem gemeinsamen Motor aufzuzeigen, der eine Vereinfachung der Steuerung der einzelnen Funktionen sowie der Brems- als auch der Antriebsmechanik aufzeigt.

Diese Aufgabe wird durch die im Anspruch 1 beschriebene Erfindung gelöst. Vorteilhafte Weiterbildungen der Erfindung sind in den Unteransprüchen beschrieben.

Im Prinzip erfolgt der Antrieb sowohl des Magnetbandes d.h. der Capstan-Antrieb als auch der Antrieb der Wickelteller von einem Motor, der auch für unterschiedliche Bandgeschwidigkeiten z.B. beim Umspulen oder auch im Bildsuchlaufbetrieb ohne Zuschalten zusätzlicher Zwischenräder den Antrieb übernimmt. Dabei wird im Normalbetrieb, d.h. bei der durch die Systemnorm vorgeschriebenen Sollgeschwindigkeit der Antrieb der Wickelteller über die Antriebsseite der Rutschkupplung mit Hilfe eines Schwenkrades vorgenommen, welches über einen Riemen angetrieben wird, wogegen die Capstan-Welle gleichzeitig Motorwelle ist, d.h. der Capstan wird direkt angetrieben.

Von einem Fädelmotor werden die Betriebsarten Stop, Umspulen, Ein- und Ausfädeln, Abspielen (Play), Bildsuchlauf vorwärts und rückwärts gesteuert. Dieses geschieht mit Hilfe eines Kurvenrades, in welches ein Steuerschieber eingreift, der durch seine jeweilige Postition innerhalb des Gerätechassis die einzelnen Betriebsarten auslöst.

Im Stop-Betrieb sind über die Steuerschieber die kupplungsübergreifenden Sperräder an Ab- und Aufwickelteller mit beiden Teilen der Rutschkupplung in Eingriff. In dieser Betriebsart ist oder mehrere Zwischenräder anzutreiben, die z.B. mit Hilfe einer Kulissensteuerung in Eingriff gebracht werden. Bei Bandstillstand, also z.B. bei ausgeschaltetem Gerät, werden die Wickel mit Hilfe einer Bremse blockiert, die durch einen Zugmagneten im Spielbetrieb gelöst wird.

Aus der GB-A-2 007 006 ist es bekannt, daß zum Wickelantrieb eines auf zwei nebeneinanderliegenden Wickelkörpern gelagerten Magnetbandes, in die jeweils ein Wickelteller eingreift, einer der beiden Wickelteller vom Capstanmotor über eine Rutschkupplung angetrieben werden kann, wobei diesem Wickelteller und dem Antriebsteil der Rutschkupplung ein beide Teile übergreifendes Sperrad anschwenkbar für einen Umspulbetrieb zugeordnet ist. Ein Vorwärts- und Rückwärts-Umspulbetrieb wird dort jedoch nicht behandelt. auch die Hauptbremse direkt an den beiden Wickeltellern im Eingriff, wodurch das stillstehende Magnetband in seiner Lage fixiert wird. Diese Bremse wird ebenfalls vom Fädelmotor über eine zusätzliche Rutschkupplung direkt gesteuert.

Während des Umspulvorganges ist die Hauptbremse gelöst, während die Sperräder an den Rutschkupplungen beider Wickelteller im Eingriff sind. Das Drehmoment wird also nicht über die Rutschkupplungen sondern über die die Kupplung überbrückenden Sperrräder übertragen. Dadurch wird erreicht, daß das notwendige volle Drehmoment an den Wickeltellern aufgebracht wird. Die Sperräder weisen ein Grundreibmoment auf, um Bandschlaufen zu verhindern.

Für den Fädelvorgang ist der Steuerschieber in einer Position, bei der das Sperrad am Abwickelteller nicht mehr anliegt, während das Sperrad am Aufwickelteller noch die Kupplung überbrückt. Zusätzlich ist in dieser Stellung des Steuerschiebers eine Sperrklinke wirksam, durch die das Sperrad an Aufwickelteller arretiert wird. Dadurch kann das Magnetband nur am Abwickelteller ein- oder ausgefädelt werden. Der Vorteil dieser Anordnung besteht darin, daß eine große Wiederkehrgenauigkeit für eine bestimmte Bandstelle auch beim Fädelvorgang erreicht wird.

Im Play-Betrieb, d.h. bei Aufnahme und Wiedergabe und auch im Suchlaufbetrieb vorwärts sind durch den Steuerschieber beide Sperräder von den Rutschkupplungen gelöst und die Andruckrolle für den Capstand-Antrieb wird in Eingriff gebracht. Außerdem wird der Bremszugfühler von Fädelmotor an das Magnetband angelegt. Er steuert über eine Bandbremse den abwickelseitigen Teller. Der Antrieb der Wickelteller erfolgt mittels Schwenkrad über die Rutschkupplungen, wodurch eine konstante Drehzahl bei gleichzeitig unterschiedlichen Wikkeldurchmessern und außerdem eine Drehmomentbegrenzung erreicht wird.

Im Bildsuchlaufbetrieb rückwärts wird im Gegensatz zum Play-Betrieb der Bandzugfühler ausgeschwenkt, da in diesem Falle der Abwickelteller über das Schwenkrad angetrieben wird.

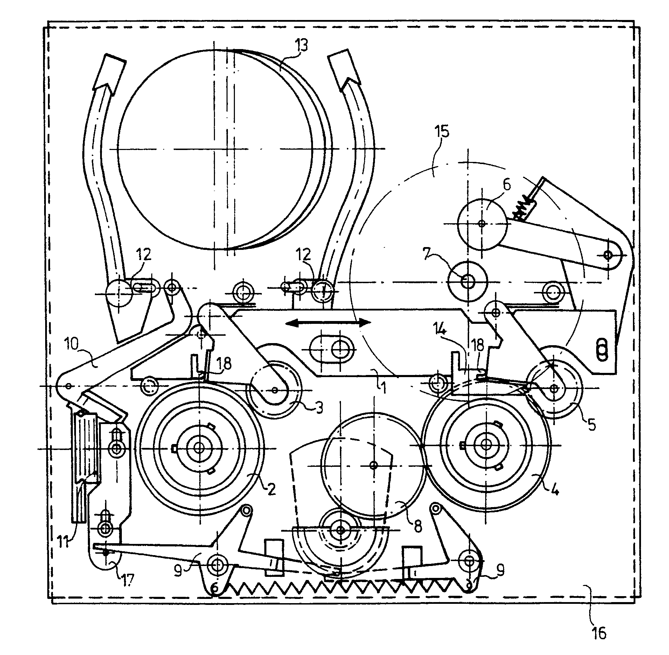

Anhand der Figur soll die Erfindung beispielhaft näher erläutert werden. Sie zeigt in einer Draufsicht den Wickelantrieb mit Steuerschieber und Sperrädern für eine Magnetbandkassette.

Der Steuerschieber 1 befindet sich in einer Position, bei der das Sperrad 3 am Abwickelteller 2 nicht mehr in Eingriff ist, während das Sperrad 5 am Aufwickelteller 4 beide Teile der Rutschkupplung überbrückt. Zusätzlich ist das Sperrad 5 durch die Sperrklinke 14 arretiert. Die Andruckrolle 6 für den Capstanantrieb ist von der Capstanwelle 7 abgehoben. Diese durch den Steuerschieber 1 bewirkte Zuordnung der einzelnen Antriebsteile stellt den Fädelbetrieb dar. Das Magnetband wird dabei von den Fädelwagen 12 aus der Kassette herausgezogen und um die Kopftrommel 13 gelegt, oder in die Kassette zurückgeführt, wenn das Schwenkrad 8 durch den als Capstan- und Wickeltellerantrieb wirkenden Motor 15 an den Abwickelteller 2 gelegt ist. Die Fädelwagen 12 werden über nicht dargestellte Fädelringe ebenso wie der Steuerschieber 1 und der Bandzugführer 10 von einem Fädelmotor über ein Kurvenrad angetrieben. Kurvenrad und Fädelmotor sind unterhalb der Chassisplatine 16 angeordnet und daher nicht dargestellt. Durch das Arretieren des Sperrades 5 während eines Fädelvorganges wird erreicht, daß das Magnetband durch den Vorgang in seiner Zuordnung zur Kopftrommel 13 nicht verschoben wird.

Die Hauptbremse 9, welche von einer Rutschkupplung 11 über einen Hebel 17 betätigt wird, ist in dieser Betriebsart nicht in Eingriff. Auch sie wird vom Fädelmotor über das Kurvenrad gesteuert und wirkt im Stop-Betrieb direkt auf die Wickelteller. Außerdem ist im Stop-Betrieb der Schieber 1 soweit in Pfeilrichtung nach links verschoben, daß auch das Sperrad 3 die Kupplung vom Wickelteller 2 überbrückt, wobei die Sperrklinke 14 das Sperrad 5 freigibt. Für den Umspulbetrieb gilt mit Ausnahme der gelösten Hauptbremse 9 die gleiche Zuordnung von Steuerschieber 1 und Sperrädern 3 und 5 wie bei Stop-Betrieb. Der Antrieb der Wickelteller erfolgt vom Motor 15 über einen unterhalb der Chassisplatine 16 befindlichen Treibriemen auf das Schwenkrad 8, welches am Antriebsteil der Rutschkupplung des jeweiligen Wickeltellers in Eingriff ist. Da jedoch über die Rutschkupplung nicht das volle erforderliche Drehmoment für den Umspulbetrieb übertragen werden kann, übernehmen in dieser Betriebsart die die Kupplungen überbrückenden Sperräder 3 bzw. 5 diese Aufgabe. Um einen guten Kraftschluß zu erreichen, sind Rutschkupplungsaußendurchmesser, Sperrad und Schwenkrad als Zahnräder mit gleichem Modul ausgebildet. Durch das Grundreibmoment, welches jedes Sperrad z.B. durch Zwischenlage eines Filzplättchens am führenden Mittelbolzen aufweist, ist auch im Umspulbetrieb für gute Bandspannung gesorgt.

Für den Play-betrieb wird der Steuerschieber 1 in seine durch den Pfeil angedeutete rechte Anschlagstellung gebracht. Diese Stellung wird erst dann erreicht, wenn das Magnetband durch den Fädelvorgang um die Kopftrommel gelegt ist und der Bandzugfühler 10 in Eingriff ist. Durch die fest mit Steuerschieber 1 verbundenen Nasen 18 werden die Sperräder 3 und 5 von den Kupplungen der Wickelteller abgehoben. Die Andruckrolle 6 wird für den Magnetbandtransport gegen die Capstanwelle 7 geführt. Der Antrieb der Wickelteller 3 bzw. 5 geschieht durch das Schwenkrad 8 über die in den Wickeltellern integrierten Rutschkupplungen. Für Bandvorlauf sowohl mit Normalgeschwindigkeit als auch veränderter Bildsuchlaufgeschwindigkeit wird der Abwickelteller 2 mittels einer nicht dargestellten Bandzugbremse, die vom Bandzugfühler 10 gesteuert ist, gebremst. Da im Bildsuchlaufbetrieb rückwärts der Abwickelteller 2 von Schwenkrad 8 angetrieben wird, ist in dieser Betriebsart der Bandzugsfühler und damit die Bandbremse ohne Funktion.

**Patentansprüche**

1. Wickelantrieb für eine Magnetbandkassette, welche zwei nebeneinanderliegende, das Magnetband führende Wickelkörper aufweist, in die jeweils ein Wickelteller (2,4) eingreift, von denen einer von einem Motor (15) über eine Rutschkupplung angetrieben werden kann, wobei diesem Wickelteller und dem Antriebsteil der Rutschkupplung ein beide Teile übergreifendes Sperrad (3,5) anschwenkbar für einen Umspulbetrieb zugeordnet ist,

dadurch gekennzeichnet,
dass jeder Wickelteller (2,4) eine Rutschkupplung aufweist und jedem Wickelteller und Antriebsteil der zugehörigen Rutschkupplung ein beide Teile übergreifendes Sperrad (3,5) anschwenkbar zugeordnet ist, welches jeweils durch einen einzigen Steuerschieber (1) für einen Vorwärts- oder Rückwärts-Umspulbetrieb an den jeweiligen Aufwickelteller (2,4) bzw. das jeweilige Antriebsteil der zugehörigen Rutschkupplung angelegt ist.

2. Antrieb nach Anspruch 1, dadurch gekennzeichnet, daß Wickelteller (2,4) und Antriebsteil der Rutschkupplung gleiche Außendurchmesser aufweisen.

3. Antrieb nach Anspruch 1 und Anspruch 2, dadurch gekennzeichnet, daß Wickelteller (2,4), Antriebsteil der Rutschkupplung, Sperrad (3,5) und Schwenkrad als Zahnrad ausgebildet sind.

4. Antrieb nach einem der Ansprüche 1 - 3, dadurch gekennzeichnet, daß bei Aufnahme- und Wiedergabebetrieb der Antrieb für die Wickelteller (2,4) über die Rutschkupplungen erfolgt.

5. Antrieb nach einem der Ansprüche 1 - 3, dadurch gekennzeichnet, daß im Umspulbetrieb der Antrieb für die Wickelteller (2,4) bei angeschwenktem Sperrrad (3,5) mit überbrückter Rutschkupplung erfolgt.

6. Antrieb nach einem der Ansprüche 1 - 5, dadurch gekennzeichnet, daß das Sperrad (3,5) ein Grundreibmoment aufweist.

7. Antrieb nach einem der Ansprüche 1 - 6, dadurch gekennzeichnet, daß für einen Fädelvorgang, bei dem das Band aus der Kassette gezogen oder in die Kassette eingezogen wird, das Sperrad (3,5) an der Aufwickelseite im Eingriff ist und durch eine Arretierklinke blokkiert ist.

8. Antrieb nach einem der Ansprüche 1 - 7, dadurch gekennzeichnet, daß im stop-Betrieb beide Sperräder (3,5) im Eingriff sind.

9. Antrieb nach einem der Ansprüche 1 - 8, dadurch gekennzeichnet, daß die Steuerung des Eingriffs der Sperrräder (3,5), der Gummiandruckrolle (6) für den Capstanantrieb und der Sperrklinke (14) für den Fädelbetrieb durch einen gemeinsamen Steuerschieber (1) erfolgt.

10. Antrieb nach einem der Ansprüche 1 - 9, dadurch gekennzeichnet, daß der Antrieb für den Steuerschieber (1) für die Fädelringe und den Bandzugfühler durch den Fädelmotor mit Hilfe eines Kurvenrades erfolgt.

11. Antrieb nach einem der Ansprüche 1 - 10, dadurch gekennzeichnet, daß die Hauptbremse vom Fädelmotor über eine Rutschkupplung drehrichtungsabhängig direkt gesteuert wird.

**Claims**

1. A winding drive for a magnetic tape cassette, which has two adjacent coil formers containing the magnetic tape into each of which a spindle (2,4) engages, one of which may be driven by a motor (15) via a slipping clutch, wherein a cogwheel (3,5) which overlaps both parts is pivotably associated with this spindle and the drive part of the slipping clutch for a rewinding operation,
   **characterised in that**
   each spindle (2,4) has a slipping clutch and with each spindle and drive part of the related slipping clutch is pivotably associated a cogwheel (3,5) which overlaps both parts, which cogwheel is applied to the respective spindle (2,4) or the respective drive part of the related slipping clutch by a single control slider (1) for a forwards or backwards rewind operation.

2. A drive according to claim 1, **characterised in that** spindle (2,4) and drive part of the slipping clutch have the same outer diameter.

3. A drive according to claim 1 and claim 2, **characterised in that** spindle (2,4), drive part of the slipping clutch, cogwheel (3,5) and swivel wheel are formed as toothed wheels.

4. A drive according to any one of claims 1 - 3, **characterised in that** during recording and playback the drive for the spindles (2,4) takes place via the slipping clutches.

5. A drive according to any one of claims 1 - 3, **characterised in that** in the rewind mode the drive for the spindles (2,4) takes place with the cogwheel applied (3,5) and the slipping clutch bypassed.

6. A drive according to any one of claims 1 - 5, **characterised in that** the cogwheel (3,5) has a basic friction torque.

7. A drive according to any one of claims 1- 6, **characterised in that** for a threading process, in which the tape is drawn out of the cassette or drawn into the cassette, the cogwheel (3,5) is in engagement on the take-up side and is blocked by a locking catch.

8. A drive according to any one of claims 1 - 7, **characterised in that** in the stop mode both cogwheels (3,5) are in engagement.

9. A drive according to any one of claims 1 - 8, **characterised in that** control of the engagement of the cogwheels (3,5), of the rubber contact roller (6) for the capstan drive and of the locking catch (14) for the threading mode takes place by means of a common control slider (1).

10. A drive according to any one of claims 1 - 9, **characterised in that** the drive for the control slider (1) for the threading rings and for the tape tension sensor takes place by means of the threading motor with the aid of a cam wheel.

11. A drive according to any one of claims 1 - 10, **characterised in that** the main brake of the threading motor is controlled directly by means of a slipping clutch in dependence on the direction of rotation.

**Revendications**

1. Commande d'enroulement pour une cassette de bande magnétique qui présente deux bobines situées l'une à côté de l'autre qui guident la bande magnétique dans lesquelles s'engrène respectivement un plateau d'enroulement (2,4), l'un d'entre eux pouvant être commandé par un moteur (15) par l'intermédiaire d'un accouplement patinant, une roue de blocage (3,5) qui a prise sur ce plateau d'enroulement et la partie commande de l'accouplement patinant étant affectée à ces deux parties en pouvant pivoter pour un mode de rebobinage, caractérisée en ce que chaque plateau d'enroulement (2,4) présente un accouplement patinant et qu'une roue de blocage (3,5) qui recouvre les deux parties est affectée en pouvant pivoter à chaque plateau d'enroulement et à la partie commande de l'accouplement patinant correspondant, roue de blocage qui est respectivement appliquée au plateau d'enroulement respectif (2,4) ou à la partie commande respective de l'accouplement patinant correspondant par un seul curseur de commande (1) pour un mode de rebobinage avant ou arrière.

2. Commande selon la revendication 1, caractérisée en ce que le plateau d'enroulement (2,4) et la partie de commande de l'accouplement patinant présentent le même diamètre extérieur.

3. Commande selon la revendication 1 et la revendication 2, caractérisée en ce que le plateau d'enroulement (2,4), la partie commande de l'accouplement patinant, la roue de blocage (3,5) et la roue pivotante sont configurés comme des roues dentées.

4. Commande selon l'une des revendications 1 à 3, caractérisée en ce qu'en mode d'enregistrement et de reproduction la commande pour les plateaux d'enroulement (2, 4) est effectuée par les accouplements patinants.

5. Commande selon l'une des revendications 1 à 3, caractérisée en ce qu'en mode de rebobinage la commande pour les plateaux d'enroulement (2, 4) se fait avec roue de blocage pivotée (3, 5) avec l'accouplement patinant surmonté.

6. Commande selon l'une des revendications 1 à 5, caractérisée en ce que la roue de blocage (3, 5) présente un moment de friction de base.

7. Commande selon l'une des revendications 1 à 6, caractérisée en ce que pour une opération d'enfilement pour laquelle la bande est tirée hors de la cassette ou est rentrée dans la cassette la roue de blocage (3, 5) est en prise sur le côté enroulement et est bloquée par un cliquet d'arrêt.

8. Commande selon l'une des revendications 1 à 7, caractérisée en ce qu'en mode arrêt les deux roues de blocage (3, 5) sont en prise.

9. Commande selon l'une des revendications 1 à 8, caractérisée en ce que la commande de l'engrènement des roues de blocage (3, 5), du galet de pression en caoutchouc (6) pour la commande du cabestan et le cliquet d'arrêt (14) pour l'opération d'enfilement se fait par un curseur de commande commun (1).

10. Commande selon l'une des revendications 1 à 9, caractérisée en ce que la commande pour le curseur de commande (1), pour les anneaux d'enfilement et le détecteur de tension de bande se fait par le moteur d'enfilement à l'aide d'une roue à cames.

11. Commande selon l'une des revendications 1 à 10, caractérisée an ce que le frein principal est commandé directement par le moteur d'enfilement par l'intermédiaire d'un accouplement patinant en fonction du sens de rotation.